Europäisches Patentamt

European Patent Office

Office européen des brevets

(11) Numéro de publication: **0 267 099 B1**

(12) **FASCICULE DE BREVET EUROPEEN**

(45) Date de publication de fascicule du brevet: **19.02.92**

(21) Numéro de dépôt: **87402381.5**

(22) Date de dépôt: **22.10.87**

(51) Int. Cl.⁵: **F16D 65/16**, F16D 63/00, B60T 13/06, B60T 13/74, B60T 8/32

(54) Dispositif de freinage pour véhicule.

(30) Priorité: **31.10.86 FR 8615195**

(43) Date de publication de la demande:
**11.05.88 Bulletin 88/19**

(45) Mention de la délivrance du brevet:
**19.02.92 Bulletin 92/08**

(84) Etats contractants désignés:
**DE ES GB IT**

(56) Documents cités:
**EP-A- 0 223 704      FR-A- 784 779
FR-A- 802 317        FR-A- 973 544
FR-A- 2 557 528      FR-E- 43 944
US-A- 4 064 973**

(73) Titulaire: **BENDIX EUROPE Services Techniques S.A.
126 rue de Stalingrad
F-93700 Drancy(FR)**

(72) Inventeur: **Fargier, Eric
13, Av.du Maréchal Foch
F-93360 Neuilly-Plaisance(FR)**

# Description

La présente invention concerne les dispositifs de freinage pour véhicules, du type comprenant un mécanisme pour entraîner au moins un organe de friction en engagement de friction avec un organe rotatif à freiner, le mécanisme comprenant un coin mobile sur un premier axe pour déplacer un organe d'actionnement du frein sous l'effet d'une force provenant d'un actionneur.

Un dispositif de freinage de ce type est décrit dans le document US-A-4,064,973. Dans ce document le dispositif d'actionnement comprend un piston pneumatique relié au coin. Ce dispositif présente des inconvénients en ce qu'il ne permet pas une modulation facile de l'effort de freinage, telle que celle requise dans un système de freinage anti-patinant.

La présente invention a donc pour objet de proposer un dispositif de freinage de construction simple et robuste et dont l'effort de freinage est susceptible d'être modulé avec facilité.

Le document FR-A-784 779 décrit un frein perfectionné comportant un servomoteur mettant en oeuvre des masselottes s'écartant sous l'effet de la force centrifuge de manière à éviter tout blocage intempestif de la roue freinée. La présente invention met également en oeuvre un ensemble centrifuge. En effet, selon un premier aspect, l'invention concerne un dispositif de freinage pour véhicule comprenant un mécanisme pour entraîner au moins un organe de friction en engagement de friction avec un organe rotatif à freiner, le mécanisme comprenant un coin mobile en translation pour déplacer un organe d'actionnement du frein sous l'effet d'une force provenant d'un actionneur comprenant un ensemble centrifuge muni d'au moins deux masselottes disposées autour d'un arbre et destinées à tourner sélectivement autour de cet arbre, la rotation des masselottes autour de cet arbre provoquant leur écartement de ce dernier, et un ensemble de liaison entre les masselottes et le coin pour convertir l'écartement des masselottes en mouvement de translation du coin.

Dans ce cas, l'invention est caractérisée en ce que les masselottes sont disposées chacune sur un ensemble de biellettes formant partie de l'ensemble de liaison qui comprend un premier et un deuxième supports disposés de manière à pouvoir tourner autour d'un arbre et maintenus solidaires en rotation par l'ensemble de biellettes mais pouvant s'écarter avec les masselottes pour déplacer le coin.

Selon un second aspect, l'invention concerne un dispositif de freinage pour véhicule comprenant un mécanisme pour entraîner au moins un organe de friction en engagement de friction avec un organe rotatif à freiner, le mécanisme comprenant un coin mobile en translation pour déplacer un organe d'actionnement du frein sous l'effet d'une force provenant d'un actionneur comprenant un arbre et un ensemble centrifuge muni d'au moins deux masselottes disposées autour de cet arbre et destinées à tourner sélectivement autour de cet arbre, la rotation des masselottes autour de cet arbre provoquant leur écartement de ce dernier, et un ensemble de liaison entre les masselottes et le coin pour convertir l'écartement des masselottes en mouvement de translation du coin, l'ensemble de liaison comprenant un premier et un deuxième supports, le deuxième support comportant une surface de came et étant disposé de manière à pouvoir tourner autour de l'arbre, les masselottes étant disposées entre le premier et le deuxième supports de façon que l'écartement des masselottes agisse sur la surface de came et provoque l'écartement des supports.

Dans ce cas, l'invention est caractérisée en ce que les masselottes comprennent quatre billes disposées de manière symétrique autour du premier axe et que le premier support est fixe par rapport à l'arbre, le deuxième support étant monté en rotation sur le coin et libre de se déplacer suivant l'arbre.

D'autres caractéristiques et avantages de la présente invention ressortiront de la description suivante de deux modes de réalisation, donnés à titre illustratif mais nullement limitatif, faite en relation avec les dessins annexés, sur lesquels :

- la figure 1 est une vue en coupe longitudinale d'un dispositif de freinage à actionnement par force centrifuge selon un premier mode de réalisation de l'invention :
- la figure 2 est une vue en coupe partielle d'un deuxième mode de réalisation du dispositif suivants la présente invention ; et
- la figure 3 est une vue en coupe partielle prise selon la ligne 3-3 de la figure 2.

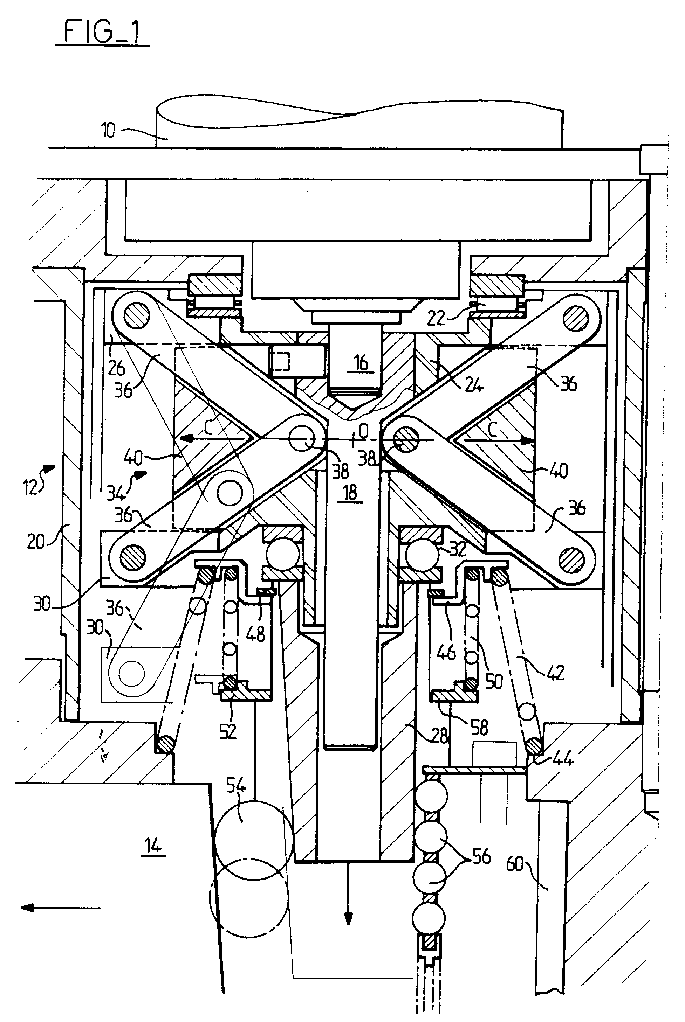

Comme représenté sur la figure 1, un dispositif de freinage comprend un moteur électrique 10, un actionneur désigné généralement par la référence 12, et un frein à disque dont seul un piston d'actionnement 14 est représenté sur la figure. Le frein à disque est d'un type connu en soi, à commande par coin. Un exemple de ce genre de frein est donné dans le document US 4,064,973 dont le contenu est supposé intégré ici par référence.

Le moteur électrique 10 comprend un arbre de sortie 16 qui est relié, coaxialement, à un arbre 18 de l'actionneur 12. L'actionneur 12 comprend un boîtier 20 dans lequel est monté, à une extrémité adjacente au moteur électrique 10, un palier à rouleaux 22. L'arbre 18 est monté à rotation dans le boîtier 20 par l'intermédiaire d'un collier 24 qui est monté sur le palier à rouleaux 22. Un premier support annulaire 26, fixé au collier 24, est également monté sur la palier à rouleaux 22.

Un coin 28 est monté autour de l'extrémité libre de l'arbre 18 de l'actionneur 12 et il est destiné à actionner le frein à disque par l'intermédiaire du piston d'actionnement 14, comme décrit ci-dessous. Le coin 28 est libre de coulisser axialement par rapport à l'arbre 18 mais ne peut pas tourner par rapport à ce dernier. Un deuxième support 30 sensiblement annulaire est monté à rotation sur le coin 28 par l'intermédiaire d'un roulement à billes 12. Des cannelures 33 sont avantageusement formées sur le deuxième support 30 et l'arbre 18.

Selon l'invention l'actionneur comprend un dispositif centrifuge, désigné généralement par la référence 34, qui comprend plusieurs paires de biellettes 36, deux paires dans l'exemple illustré, qui sont montées à pivotement sur un axe 38 de manière que les deux biellettes 36 restent dans le même plan. L'extrémité libre de la biellette 36 de chaque paire est montée à pivotement sur un support annulaire 26, 30 associé. Les deux supports annulaires 26, 30 sont ainsi maintenus solidaires en rotation autour de l'arbre 18, mais ils peuvent s'écarter l'un de l'autre sur l'axe de cet arbre. Sur l'axe 38 de chaque paire de biellettes 36, une masselotte 40 est montée à pivotement de manière que son centre de gravité soit situé dans le plan du dessin Les deux masselottes 40 sont disposées symétriquement par rapport à l'axe de l'arbre 18.

Le dispositif d'actionnement centrifuge 34 est poussé vers sa position de repos illustrée par un ressort 42 dont une extrémité est montée sur un épaulement radial 44 du boîtier 20. L'autre extrémité du ressort 42 prend appui sur une bague étagée 46 qui est retenue sur le coin 28 par un circlips 48. Un deuxième ressort 50 est retenu entre la bague étagée 46 et une extrémité d'une cage à rouleaux 52 qui est montée libre autour du coin 28 d'une manière connue. La cage à rouleaux 52 reçoit un rouleau d'actionnement 54 qui transmet l'effort du coin 28, lors de son déplacement, au piston d'actionnement 14 du frein, comme cela est connu de l'homme du métier. La cage 52 reçoit également un jeu de rouleaux 56 qui permet au coin 28 de se déplacer selon l'axe de l'arbre 18. Dans la position de repos illustrée du dispositif, l'extrémité de la cage 52 est en appui sur un épaulement radial 58 du coin 28, sou l'effet du ressort 50.

Un capteur de pression 60, qui, dans l'exemple illustré, est un capteur piezo-électrique, est monté entre le chemin de roulement des rouleaux 56 et le boîtier 20 du dispositif.

La mise en oeuvre du dispositif sera maintenant décrite. Quand le conducteur du véhicule appuie sur la pédale de freinage, un courant électrique d'intensité fonction de la position de la pédale alimente le moteur électrique 10. Le moteur 10 se met à tourner, pour entraîner en rotation l'arbre 18, les deux supports annulaires 26, 30 et les masselottes 40. Une force centrifuge agit alors sur les masselottes 40 dans la direction des flèches C et tend à écarter ces masselottes de l'axe de l'arbre. L'écartement des masselottes 40 déplace les biellettes 36 qui s'ouvrent et tendant à se mettre dans la position illustrée par des pointillés sur la figure 1. Cet écartement des masselottes 40 et des biellettes 36 provoque le déplacement, vers le bas en regardant le dessin, du deuxième support annulaire 30 et ainsi du coin 28. Le déplacement du coin 28 entraîne le déplacement des rouleaux 54 et 56, et du piston d'actionnement 14 du frein de manière connue en soi, le ressort 50 permettant un mouvement relatif entre le coin 28 et la cage 52.

Le capteur de pression 60 détecte, par réaction, la force exercée par le piston d'actionnement 14 sur les organes de friction du frein (non-représentés) permettant ainsi un asservissement précis du moteur 10. Les signaux électriques provenant du capteur de pression 60 sont transmis à une unité de commande électronique (non-représentée) qui reçoit également des signaux en provenance d'un capteur, par exemple de position, associé à la pédale de freinage (non-représentés) pour élaborer le signal de commande du moteur électrique 10.

Lors d'un ralentissement du moteur 10, le dispositif d'actionnement centrifuge 34 tend à reprendre sa position de repos sous l'effet du ressort 42, en provoquant ainsi un relâchement de freinage. Donc il est possible de moduler l'effort de freinage en modulant la vitesse de rotation du moteur.

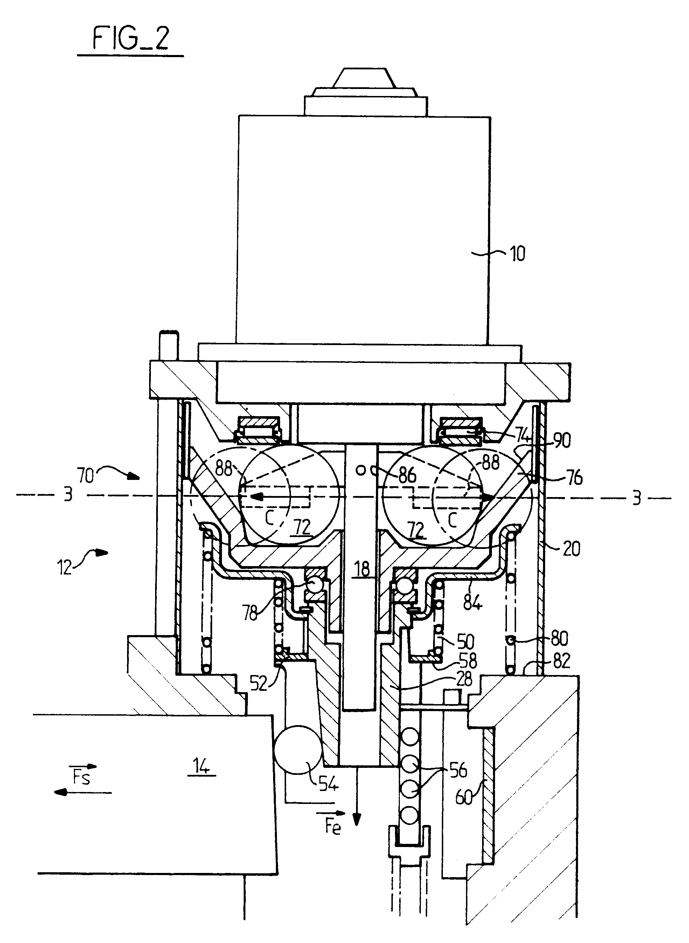

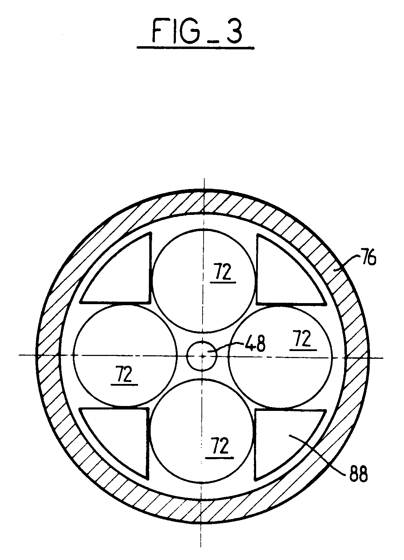

Le dispositif de freinage illustré sur les figures 2 et 3 diffère de celui de la figure 1 par la structure du dispositif d'actionnement centrifuge. Le dispositif d'actionnement du frein comprenant le coin 28, la cage à rouleaux 52, 54, 56 et le piston d'actionnement 14 ne sera pas décrit de nouveau.

Dans ce deuxième mode de réalisation, le dispositif à actionnement centrifuge, désigné généralement par la référence 70, comprend plusieurs billes métalliques 72, dans l'exemple illustré quatre billes, disposées symétriquement autour de l'arbre 18. Les billes 72 sont confinées entre une butée à aiguilles 74 fixée sur le boîtier 20 et un support 76 sensiblement en forme de coupelle. Le support 76 est monté en rotation par rapport au coin 28, par l'intermédiaire d'un roulement à billes 78, et peut coulisser axialement par rapport à l'arbre 18, à l'encontre d'un ressort 80 monté entre une surface interne du boîtier 20 et une bague étagée 84 solidaire du coin 28. Un support 86, en forme de croix, solidaire de l'arbre 18 comporte quatre projections 88, de section sensiblement triangulaire, qui retiennent les quatre billes 72 dans leurs positions espacées et les entraîne en rotation avec l'arbre 18.

La mise en oeuvre de ce dispositif est analogue à celle du dispositif de la figure 1. Lors d'un freinage, comme décrit ci-dessus, le moteur 10 se met à tourner, entraînant, par l'intermédiaire des projections 88, la rotation des billes 72 et du support 76 autour de l'axe de l'arbre, qui tourne avec les billes pour réduire les frottements. Une force centrifuge agit sur les billes 72 dans la direction des flèches C et tend à les écarter de l'axe. En s'écartant vers leurs positions représentées par des pointillés, les billes 72 agissent sur une surface interne conique 90 du support 76 et déplace celui-ci vers le bas, en regardant le dessin. Le déplacement du support 76 entraîne le déplacement du coin 28 et du piston d'actionnement 14 de manière analogue à celle observée avec le premier mode de réalisation.

Ce dispositif comporte, également, un capteur de force 60 qui permet, comme c'était le cas pour le premier mode de réalisation, de moduler de manière précise le freinage, les billes 72 reprenant leurs positions de repos, illustrées en trait plein, lors d'un ralentissement du moteur 10, sous l'effet du ressort 80.

**Revendications**

1.  Dispositif de freinage pour véhicule comprenant un mécanisme pour entraîner au moins un organe de friction en engagement de friction avec un organe rotatif à freiner, le mécanisme comprenant un coin (28) mobile en translation pour déplacer un organe d'actionnement (14) du frein sous l'effet d'une force provenant d'un actionneur (34) comprenant un ensemble centrifuge (34) muni d'au moins deux masselottes (40) disposées autour d'un arbre (18) et destinées à tourner sélectivement autour de cet arbre (18), la rotation des masselottes (40) autour de cet arbre (18) provoquant leur écartement de ce dernier, et un ensemble de liaison (36, 30) entre les masselottes (40) et le coin (28) pour convertir l'écartement des masselottes (40) en mouvement de translation du coin (28) caractérisé en ce que les dites masselottes (40) sont disposées chacune sur un ensemble de biellettes (36) formant partie dudit ensemble de liaison (36, 30) qui comprend un premier et un deuxième supports (26, 30) disposés de manière à pouvoir tourner autour du dit arbre (18) et maintenus solidaires en rotation par l'ensemble de biellettes (36) mais pouvant s'écarter avec les masselottes (40) pour déplacer le coin (28).

2.  Dispositif selon la revendication 1, caractérisé en ce que l'ensemble de biellettes (36) comprend deux paires de biellettes (36), chaque paire étant associée à une masselotte, une extrémité de chaque biellette (36) étant montée à pivotement sur l'un des supports (26, 30) et chaque paire de biellettes (36) étant reliée ensemble par un axe (38), la masselotte (40) associée à chaque paire de biellettes (36) étant montée à pivotement sur l'axe (38).

3.  Dispositif selon la revendication 2, caractérisé en ce que l'un des supports (30) est monté en rotation sur le coin (28).

4.  Dispositif de freinage pour véhicule comprenant un mécanisme pour entraîner au moins un organe de friction en engagement de friction avec un organe rotatif à freiner, le mécanisme comprenant un coin (28) mobile en translation pour déplacer un organe d'actionnement (14) du frein sous l'effet d'une force provenant d'un actionneur (34) comprenant un arbre (18) et un ensemble centrifuge (34) muni d'au moins deux masselottes (72) disposées autour de cet arbre (18) et destinées à tourner sélectivement autour de cet arbre (18), la rotation des masselottes (72) autour de cet arbre (18) provoquant leur écartement de ce dernier, et un ensemble de liaison (76, 90) entre les masselottes (72) et le coin (28) pour convertir l'écartement des masselottes (72) en mouvement de translation du coin (28), le dit ensemble de liaison (76, 90) comprenant un premier et un deuxième supports (74, 76), le deuxième support (76) comportant une surface de came (90) et étant disposé de manière à pouvoir tourner autour du dit arbre (18), les masselottes (72) étant disposées entre le premier et le deuxième supports (74, 76) de façon que l'écartement des masselottes agisse sur la surface de came (90) et provoque l'écartement des supports (74, 76), caractérisé en ce que les masselottes comprennent quatre billes (72) disposées de manière symétrique autour du dit arbre et que le premier support (74) est fixe par rapport au dit arbre, le deuxième support (76) étant monté en rotation sur le coin (28) et libre de se déplacer suivant le dit arbre.

**Claims**

1.  Braking device for a vehicle, comprising a mechanism for driving at least one friction member in frictional engagement with a rotary member to be braked, the mechanism comprising a wedge (28) movable in translation in order to shift an actuating member (14) of the brake under the effect of a force coming from an actuator (34) comprising a centrifugal assembly (34) equipped with at least two flyweights (40) arranged about a shaft (18) and intended for rotating selectively about this shaft (18), the rotation of the flyweights (40) about this shaft (18) causing them to move away from the latter, and an assembly of links (36, 30) between the flyweights (40) and the wedge (28) for converting the movement away of the flyweights (40) into a translational movement of the wedge (28) characterised in that the said flyweights (40) are each arranged on an assembly of links (36) forming part of the said assembly of links (36, 30) which comprises a first and a second support (26, 30) arranged so as to be rotatable about the said shaft (18) and maintained integral with one another in terms of rotation by means of the assembly of links (36), but capable of moving away from one another together with the flyweights (40), in order to move the wedge (28).

2. Device according to Claim 1, characterised in that the assembly of links (36) comprises two pairs of links (36), each pair being associated with a flyweight, one end of each link (36) being mounted pivotably on one of the supports (26, 30), and each pair of links (36) being connected together by means of an axle (38), the flyweight (40) associated with each pair of links (36) being mounted pivotably on the axle (38).

3. Device according to Claim 2, characterised in that one of the supports (30) is mounted rotatably on the wedge (28).

4. Braking device for a vehicle, comprising a mechanism for driving at least one friction member in frictional engagement with a rotary member to be braked, the mechanism comprising a wedge (28) movable in translation in order to shift an actuating member (14) of the brake under the effect of a force coming from an actuator (34) comprising a shaft (18) and a centrifugal assembly (34) equipped with at least two flyweights (72) arranged about this shaft (18) and intended for rotating selectively about this shaft (18), the rotation of the flyweights (72) about this shaft (18) causing them to move away from the latter, and a connecting assembly (76, 90) between the flyweights (72) and the wedge (28) for converting the movement away of the flyweights (72) into a translational movement of the wedge (28) the said connecting assembly (76, 90) comprising a first and a second support (74, 76), the second support (76) having a cam surface (90) and being arranged so as to be rotatable about the said shaft (18), the flyweights (72) being arranged between the first and the second support (74, 76), in such a way that the movement of the flyweights away from one another acts on the cam surface (90) and causes the supports (74, 76) to move away from one another, characterised in that the flyweights comprise four balls (72) arranged symmetrically about the said shaft and in that the first support (74) is fixed relative to the said shaft, the second support (76) being mounted rotatably on the wedge (28) and being free to move in the said shaft.

**Patentansprüche**

1. Bremsvorrichtung für Fahrzeug, mit einem Mechanismus zum Bewegen wenigstens eines Reibungselementes in einem Reibungseingriff mit einem zu bremsenden drehbaren Element, wobei der Mechanismus einen translationsbeweglichen Keil (28) aufweist, um ein Betätigungselement (14) der Bremse unter der Wirkung einer Kraft zu verschieben, die von einem Betätigungselement (34) erzeugt wird, das eine Zentrifugeneinheit (34) aufweist, die mit wenigstens zwei Fliehgewichten (40) versehen ist, die um eine Welle (18) angeordnet und dazu vorgesehen sind, sich um diese Welle (18) wahlweise zu drehen, wobei die Drehung der Fliehgewichte (40) um diese Welle (18) ihre Entfernung von dieser letzteren bewirkt, und eine Verbindungseinheit (36, 30) zwischen den Fliehgewichten (40) und dem Keil (28) zum Umwandeln der Entfernung der Fliehgewichte (40) in eine Bewegung in Verschiebungsrichtung des Keils (28) umfaßt, dadurch gekennzeichnet, daß die Fliehgewichte (40) jeweils an einer Schwingarmeinheit (36) angeordnet sind, die einen Teil der Verbindungseinheit (36, 30) bildet, die einen ersten und einen zweiten Träger (26, 30) umfaßt, die so angeordnet sind, daß sie sich um die Welle (18) drehen können und durch die Schwingarmeinheit (36) drehfest verbunden bleiben, sich jedoch mit den Fliehgewichten (40) entfernen können, um den Keil (28) zu verschieben.

2. Vorrichtung gemäß Anspruch 1, dadurch gekennzeichnet, daß die Schwingarmeinheit (36) zwei Paare von Schwingarmen (36) umfaßt, wobei jedes Paar einem Fliehgewicht zugeordnet ist, ein Ende eines jeden Schwingarms (36) an einem der Träger (26, 30) angelenkt ist und jedes Paar von Schwingarmen (36) mittels einer Achse (38) zu einer Einheit verbunden ist, wobei das einem jeden Paar von Schwingarmen (36) zugeordnete Fliehgewicht (40) an der Achse (38) schwenkbar angebracht ist.

3. Vorrichtung gemäß Anspruch 2, dadurch gekennzeichnet, daß einer der Träger (30) am Keil (28) drehbar angebracht ist.

4. Bremsvorrichtung für Fahrzeug, mit einem Mechanismus zum Bewegen wenigstens eines Reibungselementes in einem Reibungseingriff mit einem zu bremsenden drehbaren Element, wobei der Mechanismus einen translationsbeweglichen Keil (28) umfaßt, um ein Betätigungselement (14) der Bremse unter der Wirkung einer Kraft zu verschieben, die von einem Betätigungselement (34) erzeugt wird, das eine Welle (18) und eine Zentrifugeneinheit (34) aufweist, die mit wenigstens zwei Fliehgewichten (72) versehen ist, die um diese Welle (18) angeordnet und dazu bestimmt sind, sich wahlweise um diese Welle (18) zu drehen, wobei die Drehung der Fliehgewichte (72) um diese Welle (18) ihre Entfernung von dieser letzteren bewirkt, und eine Verbindungseinheit (76, 90) zwischen den Fliehgewichten (72) und dem Keil (28), um die Entfernung der Fliehgewichte (72) in eine Bewegung in Verschiebungsrichtung des Keils (28) umzuwandeln, umfaßt, wobei die Verbindungseinheit (76, 90) einen ersten und einen zweiten Träger (74, 76) umfaßt, wobei der zweite Träger (76) eine Nockenfläche (90) aufweist und so angeordnet ist, daß er sich um die Welle (18) drehen kann, wobei die Fliehgewichte (72) zwischen dem ersten und dem zweiten Träger (74, 76) so angeordnet sind, daß die Entfernung der Fliehgewichte auf die Nockenfläche (90) wirkt und die Entfernung der Träger (74, 76) hervorruft, dadurch gekennzeichnet, daß die Fliehgewichte vier Kugeln (72) umfassen, die auf symmetrische Weise um die Welle angeordnet sind, und daß der erste Träger (74) in bezug auf die Welle fest ist, wobei der zweite Träger (76) am Keil (28) drehbar angebracht ist und sich längs dieser Welle frei verschieben kann.

# FIG_1

FIG_2

# FIG _ 3